# EUROPEAN PATENT APPLICATION

(11) **EP 4 694 370 A1**
(43) Date of publication of application: **11.02.2026**
(21) Application number: 24784046.5
(22) Date of filing: 15.03.2024
(51) Int. Cl.: H04W 52/02

(54) **COMMUNICATION METHOD AND APPARATUS**

(30) Priority: 07.04.2023 CN 202310384728
(71) Applicant: Huawei Technologies Co., Ltd., Shenzhen, Guangdong 518129 (CN)
(72) Inventor: JIAO, Minghan, Shenzhen, Guangdong 518129 (CN); LI, Ruijie, Shenzhen, Guangdong 518129 (CN); GUAN, Lei, Shenzhen, Guangdong 518129 (CN)
(74) Representative: Gill Jennings & Every LLP
(86) International application number: PCT/CN2024/081987
(87) International publication number: WO 2024/207961

(57) **Abstract**

A communication method and apparatus are provided and relate to the field of wireless communication technologies. The method includes: A terminal device receives first indication information and second indication information that are sent by a network device, where the first indication information enables a first discontinuous transmission configuration for cells in a first cell set, and the second indication information enables a second discontinuous transmission configuration for cells in the first cell set. The terminal device determines that the cells that are in the first cell set and whose first discontinuous transmission configuration is enabled are all in inactive time in the first discontinuous transmission configuration, and stops or suspends a timer corresponding to the second discontinuous transmission configuration. According to the method, a sending/receiving behavior of the terminal device can be controlled if C-DRX and cell DTX/DRX are configured for the cells.

## Description

### CROSS-REFERENCE TO RELATED APPLICATIONS

This application claims priority to Chinese Patent Application No. 202310384728.8, filed with the China National Intellectual Property Administration on April 7, 2023 and entitled "COMMUNICATION METHOD AND APPARATUS", which is incorporated herein by reference in its entirety.

### TECHNICAL FIELD

Embodiments of this application relate to the wireless communication field, and in particular, to a communication method and apparatus.

### BACKGROUND

With continuous evolution of a cellular communication technology, a network transmission bandwidth has been continuously increasing. An increase in a peak to average power ratio (peak to average power ratio, PAPR) causes efficiency of a power amplifier (power amplifier, PA) to gradually decrease, resulting in a corresponding rise in transmit power consumption of a network device (for example, a base station). A sharp increase in a quantity of transmission channels causes static power consumption of a system to also rise accordingly.

To reduce the system power consumption, configuring an energy saving mode for the network device and a terminal device has become a focus of current research. How to control a sending/receiving behavior of the terminal device in energy saving mode is a problem that needs to be resolved currently.

### SUMMARY

Embodiments of this application provide a communication method and apparatus, to control sending/receiving by a terminal device in a scenario in which discontinuous transmission is configured for a cell.

According to a first aspect, a communication method is provided. The method may be applied to a terminal device, and the method includes: A terminal device receives first indication information and second indication information that are sent by a network device, where the first indication information enables a first discontinuous transmission configuration for cells in a first cell set, and the second indication information enables a second discontinuous transmission configuration for cells in the first cell set. The terminal device determines that the cells that are in the first cell set and whose first discontinuous transmission configuration is enabled are all in inactive time in the first discontinuous transmission configuration, and stops or suspends a timer corresponding to the second discontinuous transmission configuration.

Optionally, the first discontinuous transmission configuration may include a cycle and the inactive time in the cycle. A first cell in the first cell set is used as an example. That the first indication information enables the first discontinuous transmission configuration for the first cell may be understood as that the first indication information indicates not to transmit a first channel in the first cell within the inactive time in the first discontinuous transmission configuration.

Optionally, the first discontinuous transmission configuration is a cell discontinuous transmission/discontinuous reception (cell DTX/DRX) configuration, and the second continuous transmission configuration is a connected-mode discontinuous reception (C-DRX) configuration.

An example in which the first discontinuous transmission configuration is the cell DTX/DRX configuration and the second discontinuous transmission configuration is the C-DRX configuration is used. The foregoing implementation specifies an understanding of or a behavior on a C-DRX timer of the cells in the first cell set when both the cell DTX/DRX configuration and the C-DRX configuration are enabled for a cell, so that the terminal device can correctly understand the cell DTX/DRX configuration and the C-DRX configuration. When all the cells whose cell DTX/DRX configuration is enabled enter the inactive time, the C-DRX timer is stopped or suspended, so that a corresponding behavior of the C-DRX timer can be clarified, and unnecessary running of the C-DRX timer can be reduced.

In a possible implementation, the cells in the first cell set belong to a first DRX group, the first indication information enables the first discontinuous transmission configuration for N cells in the first DRX group, the N cells are all cells or some cells in the first DRX group, the second indication information enables the second discontinuous transmission configuration for the first DRX group, and N is a positive integer. Determining that the cells that are in the first cell set and whose first discontinuous transmission configuration is enabled are all in the inactive time in the first discontinuous transmission configuration, and stopping or suspending the timer corresponding to the second discontinuous transmission configuration includes: determining that the N cells are all in the inactive time in the first discontinuous transmission configuration, and stopping or suspending the timer corresponding to the second discontinuous transmission configuration.

Optionally, the timer includes one or more of the following: a discontinuous reception DRX inactivity timer (drx-InactivityTimer), a scheduling request (scheduling request, SR) prohibit timer (sr-ProhibitTimer), a medium access control (medium access control, MAC) contention resolution timer (mac-ContentionResolutionTimer), a short DRX cycle timer (drx-ShortCycleTimer), a downlink automatic repeat request (hybrid automatic repeat request, HARQ) round trip time timer (drx-HARQ-RTT-TimerDL), an uplink HARQ round trip time timer (drx-HARQ-RTT-TimerUL), a DRX uplink retransmission timer (drx-RetransmissionTimerUL), or a DRX downlink retransmission timer (drx-RetransmissionTimerDL).

Optionally, the method further includes: when the N cells in the first DRX group are all in active time in the first discontinuous transmission configuration, resuming the suspended timer; and/or when the first DRX group is in active time in the second discontinuous transmission configuration, resuming the suspended timer. In the foregoing implementations, after the timer is suspended, the timer may further continue to be enabled on a subsequent enabling occasion, so that transmission occasions can be increased for the channel on which cell DTX/DRX functions and/or a channel on which C-DRX functions.

In a possible implementation, the first cell set includes a first DRX group and a second DRX group, the first indication information enables the first discontinuous transmission configuration for N1 cells in the first DRX group, the N1 cells are all or some cells in the first DRX group, the second indication information enables the second discontinuous transmission configuration for the first DRX group and the second DRX group, and N1 and N2 are both positive integers. Determining that the cells that are in the first cell set and whose first discontinuous transmission configuration is enabled are all in the inactive time in the first discontinuous transmission configuration, and stopping or suspending the timer corresponding to the second discontinuous transmission configuration includes: determining that the N1 cells in the first DRX group are all in the inactive time in the first discontinuous transmission configuration, and stopping or suspending a first timer of the first DRX group, where the first timer is a timer corresponding to the second discontinuous transmission configuration. Optionally, the first timer includes one or more of the following: a drx-InactivityTimer, an sr-ProhibitTimer, or a mac-ContentionResolutionTimer.

Optionally, the method further includes: when the N1 cells in the first DRX group are all in active time in the first discontinuous transmission configuration, resuming the suspended first timer of the first DRX group; and/or when the first DRX group is in active time in the second discontinuous transmission configuration, resuming the suspended first timer of the first DRX group.

Optionally, the first indication information further enables the first discontinuous transmission configuration for N2 cells in the second DRX group, the N2 cells are all or some cells in the second DRX group, and N2 is a positive integer. The method further includes: determining that the N2 cells in the second DRX group are all in the inactive time in the first discontinuous transmission configuration, and stopping or suspending a first timer of the second DRX group, where the first timer is a timer corresponding to the second discontinuous transmission configuration.

Optionally, the method further includes: when the N2 cells in the second DRX group are all in active time in the first discontinuous transmission configuration, resuming a suspended first timer of the second DRX group; and/or when the second DRX group is in active time in the second discontinuous transmission configuration, resuming a suspended first timer of the second DRX group.

Optionally, the method further includes: stopping or suspending a second timer corresponding to the second discontinuous transmission configuration, where the second timer is a timer of the first DRX group and the second DRX group. Optionally, the second timer includes one or more of the following: a drx-RetransmissionTimerUL, a drx-RetransmissionTimerDL, a drx-HARQ-RTT-TimerDL, a drx-HARQ-RTT-TimerUL, or a drx-ShortCycleTimer.

Optionally, the method further includes: when the N1 cells in the first DRX group and the N2 cells in the second DRX group are all in the active time in the first discontinuous transmission configuration, resuming the suspended second timer; and/or when the first DRX group and the second DRX group are in the active time in the second discontinuous transmission configuration, resuming the suspended second timer.

In a possible implementation, the first cell set includes the first cell. The method further includes: when the first cell is in the inactive time in the first discontinuous transmission configuration, and the first cell is in the active time in the second discontinuous transmission configuration, determining that the first cell is in an inactive state.

It can be understood that the first cell being in the inactive state means that the first channel and/or a second channel are/is not transmitted in the first cell. The example in which the first discontinuous transmission configuration is the cell DTX/DRX configuration and the second discontinuous transmission configuration is the C-DRX configuration is used. The first cell being in the inactive state means that the first channel and/or the second channel are/is not transmitted in the first cell. The first channel is a channel that is indicated by the cell DTX/DRX configuration and that is not transmitted within the cell DTX/DRX inactive time (or a channel that is transmitted within the cell DTX/DRX active time), and the second channel is a channel that is indicated by the C-DRX configuration and that is not transmitted within the C-DRX inactive time (or a channel that is transmitted within the C-DRX active time). The first channel and the second channel are not exactly the same.

According to a second aspect, a communication method is provided. The method includes: a network device, configured to send first indication information and second indication information to a terminal device, where the first indication information enables a first discontinuous transmission configuration for cells in a first cell set, and the second indication information enables a second discontinuous transmission configuration for cells in the first cell set; and the terminal device, configured to perform the method according to any one in the first aspect.

According to a third aspect, a communication apparatus is provided, and includes a transceiver unit and a processing unit. The transceiver unit is configured to receive first indication information and second indication information that are sent by a network device, where the first indication information enables a first discontinuous transmission configuration for cells in a first cell set, and the second indication information enables a second discontinuous transmission configuration for cells in the first cell set; and the processing unit is configured to: determine that the cells that are in the first cell set and whose first discontinuous transmission configuration is enabled are all in inactive time in the first discontinuous transmission configuration, and stop or suspend a timer corresponding to the second discontinuous transmission configuration.

Optionally, the first discontinuous transmission configuration is a cell DTX/DRX configuration, and the second continuous transmission configuration is a C-DRX configuration.

In a possible implementation, the cells in the first cell set belong to a first DRX group, the first indication information enables the first discontinuous transmission configuration for N cells in the first DRX group, the N cells are all cells or some cells in the first DRX group, the second indication information enables the second discontinuous transmission configuration for the first DRX group, and N is a positive integer. The processing unit is specifically configured to: determine that the N cells are all in the inactive time in the first discontinuous transmission configuration, and stop or suspend the timer corresponding to the second discontinuous transmission configuration.

Optionally, the processing unit is further configured to: when the N cells in the first DRX group are all in active time in the first discontinuous transmission configuration, resume the suspended timer; and/or when the first DRX group is in active time in the second discontinuous transmission configuration, resume the suspended timer.

Optionally, the timer includes one or more of the following: a DRX inactivity timer drx-InactivityTimer, an SR prohibit timer sr-ProhibitTimer, a MAC contention resolution timer mac-ContentionResolutionTimer, a short DRX cycle timer drx-ShortCycleTimer, a downlink HARQ round trip time timer drx-HARQ-RTT-TimerDL, an uplink HARQ round trip time timer drx-HARQ-RTT-TimerUL, a DRX uplink retransmission timer drx-RetransmissionTimerUL, or a DRX downlink retransmission timer drx-RetransmissionTimerDL.

In a possible implementation, the first cell set includes a first DRX group and a second DRX group, the first indication information enables the first discontinuous transmission configuration for N1 cells in the first DRX group, the N1 cells are all or some cells in the first DRX group, the second indication information enables the second discontinuous transmission configuration for the first DRX group and the second DRX group, and N1 and N2 are both positive integers. The processing unit is specifically configured to: determine that the N1 cells in the first DRX group are all in the inactive time in the first discontinuous transmission configuration, and stop or suspend a first timer of the first DRX group, where the first timer is a timer corresponding to the second discontinuous transmission configuration. Optionally, the first timer includes one or more of the following: a drx-InactivityTimer, an sr-ProhibitTimer, or a mac-ContentionResolutionTimer.

Optionally, the processing unit is further configured to: when the N1 cells in the first DRX group are all in active time in the first discontinuous transmission configuration, resume the suspended first timer of the first DRX group; and/or when the first DRX group is in active time in the second discontinuous transmission configuration, resume the suspended first timer of the first DRX group.

Optionally, the first indication information further enables the first discontinuous transmission configuration for N2 cells in the second DRX group, the N2 cells are all or some cells in the second DRX group, and N2 is a positive integer. The processing unit is further configured to: determine that the N2 cells in the second DRX group are all in the inactive time in the first discontinuous transmission configuration, and stop or suspend a first timer of the second DRX group, where the first timer is a timer corresponding to the second discontinuous transmission configuration. Optionally, the first timer includes one or more of the following: a drx-InactivityTimer, an sr-ProhibitTimer, or a mac-ContentionResolutionTimer.

Optionally, the processing unit is further configured to: when the N2 cells in the second DRX group are all in the active time in the first discontinuous transmission configuration, resume the suspended first timer of the second DRX group; and/or when the second DRX group is in the active time in the second discontinuous transmission configuration, resume the suspended first timer of the second DRX group.

Optionally, the processing unit is further configured to: when the N1 cells in the first DRX group are all in the active time in the first discontinuous transmission configuration, and the N2 cells in the second DRX group are all in the inactive time in the first discontinuous transmission configuration, stop or suspend a second timer corresponding to the second discontinuous transmission configuration, where the second timer is a timer of the first DRX group and the second DRX group. Optionally, the second timer includes one or more of the following: a drx-RetransmissionTimerUL, a drx-RetransmissionTimerDL, a drx-HARQ-RTT-TimerDL, a drx-HARQ-RTT-TimerUL, or a drx-ShortCycleTimer.

Optionally, the processing unit is further configured to: when the N1 cells in the first DRX group and the N2 cells in the second DRX group are all in the active time in the first discontinuous transmission configuration, resume the suspended second timer; and/or when the first DRX group and the second DRX group are in the active time in the second discontinuous transmission configuration, resume the suspended second timer.

In a possible implementation, the first cell set includes a first cell. The processing unit is further configured to: when the first cell is in the inactive time in the first discontinuous transmission configuration, and the first cell is in the active time in the second discontinuous transmission configuration, determine that the first cell is in an inactive state.

According to a fourth aspect, a communication apparatus is provided. The communication apparatus includes a unit or a module configured to perform the method according to any one in the first aspect.

According to a fifth aspect, a communication apparatus is provided. The communication apparatus includes one or more processors and one or more memories, where the one or more memories store one or more programs, and when the program is executed by the one or more processors, the apparatus is enabled to perform the method according to any one in the first aspect.

According to a sixth aspect, a chip system is provided. The chip system includes at least one chip and a memory, and the at least one chip is configured to read and execute a program stored in the memory, to implement the method according to any one in the first aspect.

According to a seventh aspect, a readable storage medium is provided. The readable storage medium includes a program, and when the program is run on an apparatus, the apparatus is enabled to perform the method according to any one in the first aspect.

According to an eighth aspect, a program product is provided. When the program product is run on an apparatus, the apparatus is enabled to perform the method according to any one in the first aspect.

### BRIEF DESCRIPTION OF DRAWINGS

FIG. 1 is a diagram of an architecture of a mobile communication system to which an embodiment of this application is applied;
FIG. 2 is a diagram of active time and inactive time in a C-DRX cycle;
FIG. 3 is a diagram of active time and inactive time in a cell DTX/DRX cycle;
FIG. 4 is a schematic flowchart of a communication method according to an embodiment of this application;
FIG. 5 is a diagram of separately enabling different cell DTX/DRX configurations for different cells by using first indication information according to an embodiment of this application;
FIG. 6a is a diagram in which, when a first cell set includes only one DRX group, a terminal device determines that cells in the DRX group are in an inactive state in an overlapping time period, and stops or suspends a C-DRX timer based on this, according to an embodiment of this application;
FIG. 6b is a diagram in which, when a first cell set includes two DRX groups, a terminal device determines that cells in the DRX groups are in an inactive state in an overlapping time period, and stops or suspends a C-DRX timer based on this, according to an embodiment of this application;
FIG. 7a is a diagram in which, when a first cell set includes only one DRX group, a terminal device determines that cells in the DRX group are in an active state in an overlapping time period, according to an embodiment of this application;
FIG. 7b is a diagram in which, when a first cell set includes two DRX groups, a terminal device determines that cells in the DRX groups are in an active state in an overlapping time period, according to an embodiment of this application;
FIG. 8 is a diagram of a structure of a communication apparatus according to an embodiment of this application; and
FIG. 9 is a diagram of a structure of another communication apparatus according to an embodiment of this application.

### DESCRIPTION OF EMBODIMENTS

Embodiments of this application may be applied to various communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, and a 5th generation (5th generation, 5G) system or new radio (new radio, NR), or be applied to a future communication system, another similar communication system, or the like.

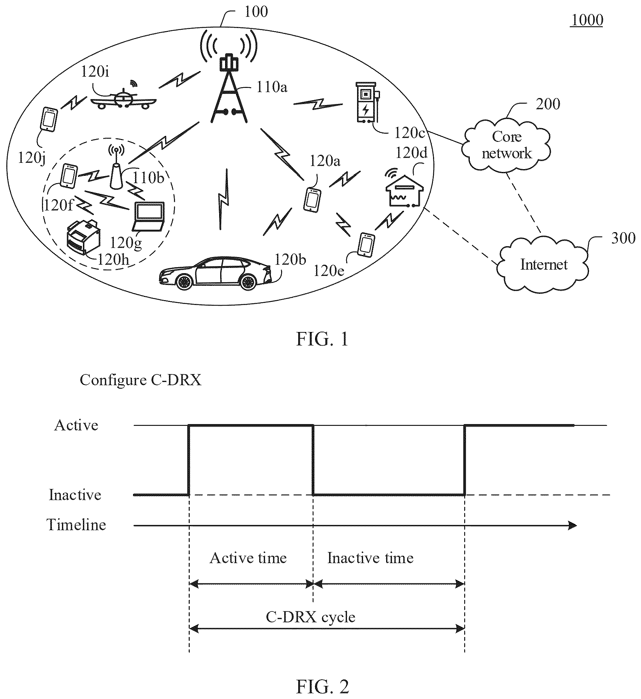

FIG. 1 is a diagram of an architecture of a communication system 1000 to which an embodiment of this application is applied. As shown in FIG. 1, the communication system includes a radio access network 100 and a core network 200. Optionally, the communication system 1000 may further include an Internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different physical devices, or functions of a core network device and logical functions of the radio access network device may be integrated into a same physical device, or some functions of a core network device and some functions of the radio access network device may be integrated into one physical device. A wired or wireless manner may be used for connection between the terminals and between the radio access network devices. FIG. 1 is merely a diagram. The communication system may further include another network device, for example, may further include a wireless relay device and a wireless backhaul device, which are not drawn in FIG. 1.

The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like; or may be a module or a unit that completes some functions of a base station, for example, may be a central unit (central unit, CU), or may be a distributed unit (distributed unit, DU). Herein, the CU completes functions of a radio resource control protocol and a packet data convergence protocol (packet data convergence protocol, PDCP) of the base station, and may further complete functions of a service data adaptation protocol (service data adaptation protocol, SDAP); and the DU completes functions of a radio link control layer and a MAC layer of the base station, and may further complete some or all of functions of a physical layer. For detailed descriptions of the foregoing protocol layers, refer to related technical specifications of the 3rd generation partnership project (3rd generation partnership project, 3GPP). The radio access network device may be a macro base station (for example, 110a in FIG. 1), or may be a micro base station or an indoor base station (for example, 110b in FIG. 1), or may be a relay node, a donor node, or the like. A specific technology and a specific device form that are used by the radio access network device are not limited in embodiments of this application. For ease of description, the following uses a network device as an example of the radio access network device for description.

The terminal may also be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), Internet of things (Internet of things, IoT), virtual reality, augmented reality, industrial control, automated driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal are not limited in embodiments of this application.

The network device and the terminal may be at a fixed location or may be movable. The network device and the terminal may be deployed on the land, including an indoor device, an outdoor device, a handheld device, or a vehicle-mounted device; may be deployed on the water surface; or may be deployed on an airplane, a balloon, and an artificial satellite. Application scenarios of the network device and the terminal are not limited in embodiments of this application.

Roles of the network device and the terminal may be relative. For example, the helicopter or uncrewed aerial vehicle 120i in FIG. 1 may be configured as a mobile network device. For the terminal 120j that is connected to the radio access network 100 by using 120i, the uncrewed aerial vehicle 120i is a network device. However, for the network device 110a, 120i is a terminal, that is, 110a communicates with 120i by using a radio air interface protocol. Certainly, 110a may alternatively communicate with 120i by using an interface protocol between network devices. In this case, for 110a, 120i is also a network device. Therefore, both the network device and the terminal may be collectively referred to as communication apparatuses. 110a and 110b in FIG. 1 may be referred to as communication apparatuses with a function of a network device, and 120a to 120j in FIG. 1 may be referred to as communication apparatuses with a function of a terminal.

Communication between the network device and the terminal, between the network devices, or between the terminals may be performed by using a licensed spectrum, or may be performed by using an unlicensed spectrum, or may be performed by using both a licensed spectrum and an unlicensed spectrum. Communication may be performed by using a spectrum of 6 gigahertz (gigahertz, GHz) or below, or may be performed by using a spectrum of 6 GHz or above, or may be performed by using both a spectrum of 6 GHz or below and a spectrum of 6 GHz or above. A spectrum resource used for wireless communication is not limited in embodiments of this application.

In embodiments of this application, a function of the network device may alternatively be performed by a module (for example, a chip) in the network device, or may be performed by a control subsystem that includes the function of the network device. Herein, the control subsystem that includes the function of the network device may be a control center in application scenarios such as a smart grid, industrial control, smart transportation, and a smart city. A function of the terminal may alternatively be performed by a module (for example, a chip or a modem) in the terminal, or may be performed by an apparatus that includes the function of the terminal.

To make objectives, technical solutions, and advantages of this application clearer, the following further describes this application in detail with reference to accompanying drawings. A specific operation method in a method embodiment may also be applied to an apparatus embodiment or a system embodiment.

The following describes some terms in embodiments of this application, to facilitate understanding by a person skilled in the art.

### (1) Radio network temporary identifier (radio network temporary identifier, RNTI)

An RNTI is used to distinguish or identify a connected terminal device in a cell, a specific radio channel, a group of terminal devices in a case of paging, a group of terminal devices that receive a power control parameter, or system information sent by a network device to all terminal devices. The RNTI may be a 16-bit identifier. A value of the RNTI depends on a type of the RNTI. For example, an RNTI used for paging (paging) is denoted as a P-RNTI. In addition, there is further a cell radio network temporary identifier (cell radio network temporary identifier, C-RNTI) used for data scheduling, a modulation and coding scheme cell radio network temporary identifier (modulation and coding scheme cell radio network temporary identifier, MCS-C-RNTI), a configured scheduling radio network temporary identifier (configured scheduling radio network temporary identifier, CS-RNTI), and the like.

### (2) Connected-mode discontinuous reception (C-DRX)

C-DRX is an energy saving technology for a terminal device in an RRC_CONNECTED state. A cycle including active time and inactive time is configured for the terminal device. Within the inactive time in the cycle, the terminal device does not receive/does not send some signals/channels. Within the active time in the cycle, the terminal device may receive/send the foregoing signals/channels. C-DRX may be configured at a granularity of a cell group (cell group), that is, an exactly same C-DRX cycle is configured for a group of cells (cell) on a terminal device side. C-DRX may be configured (or referred to as enabled) based on RRC signaling. For example, FIG. 2 shows active time and inactive time in a C-DRX cycle. The signals/channels are not sent/are not received within the inactive time, so that power consumption can be reduced for a terminal device. As shown in FIG. 2, the C-DRX cycle includes the active time (also referred to as an active period) and the inactive time (also referred to as an inactive period) in a time sequence.

In embodiments of this application, a signal/channel transmitted within the active time in the C-DRX cycle may include one or more of the following: a PDCCH scrambled with a cell RNTI (cell RNTI), a PDCCH scrambled with a configured scheduling RNTI (configured scheduling RNTI, CS-RNTI), a PDCCH scrambled with an interruption RNTI (interruption RNTI, INT-RNTI), a PDCCH scrambled with a cancellation indication RNTI (cancellation indication RNTI, CI-RNTI), a PDCCH scrambled with a slot format indication RNTI (slot format indication RNTI, SFI-RNTI), a PDCCH scrambled with a transmit power control-PUCCH RNTI (transmit Power Control-PUCCH RNTI, TPC-PUCCH-RNTI, where PUCCH is an English abbreviation for physical uplink control channel, that is, physical uplink control channel), a PDCCH scrambled with a transmit power control-PUSCH radio network temporary identifier (Transmit Power Control-PUSCH RNTI, TPC-PUSCH-RNTI), a PDCCH scrambled with a transmit power control-SRS RNTI (Transmit Power Control-SRS RNTI, TPC-SRS-RNTI), a PDCCH scrambled with a soft resource availability indication RNTI (Availability indication radio network temporary identifier, AI-RNTI), a dynamically scheduled PDSCH, a dynamic grant (dynamic Grant, DG) physical uplink shared channel (physical uplink shared channel, PUSCH), a HARQ-ACK for a dynamically scheduled PDSCH, an A-SRS (aperiodic SRS, aperiodic SRS, where SRS is an English abbreviation for sounding reference signal, that is, sounding reference signal), a P-SRS (periodic SRS, periodic SRS), an SP-SRS (semi-persistent SRS, semi-persistent SRS), an A-CSI (aperiodic CSI, aperiodic CSI, where CSI is an English abbreviation for channel state information, that is, channel state information), a P-CSI (periodic CSI, periodic CSI), or an SP-CSI (semi-persistent CSI, semi-persistent CSI).

The C-DRX technology specifies some timers, to control the terminal device to receive and/or send the signal/channel. It can be understood that a C-DRX timer performs counting after being started. During counting, the timer may be interrupted. After being interrupted, the timer may stop, or may be restarted when a specific condition is met. If the timer is not interrupted after being started, the timer expires after a specific period of time (a length of the time period is determined by a threshold of the timer). After the timer expires, the timer is reset to zero.

For example, parameters (including the timers) related to embodiments of this application may include the following.
(1) DRX cycle (DRX cycle): a cycle of discontinuous reception. In each DRX cycle, the terminal device periodically wakes up and stays awake for a period of time to receive data. There are two types of DRX cycles: a long DRX cycle and a short DRX cycle. The long DRX cycle is an integer multiple of the short DRX cycle.
(2) DRX on-duration timer (drx-OnDurationTimer): time during which the terminal device needs to continuously monitor a PDCCH, starting from a start subframe of a DRX cycle. A length of the time is a segment of consecutive downlink subframes, that is, a value of the timer may be a quantity of consecutive downlink subframes. The timer starts at a start moment of each DRX cycle.
(3) DRX inactivity timer (drx-InactivityTimer): a quantity of consecutive downlink subframes. In this time period, the terminal device needs to monitor a PDCCH. The timer is started or restarted when the terminal device successfully demodulates a PDCCH that is of the terminal device and that is for initial data transmission.
(4) drx-HARQ-RTT-TimerDL: a minimum downlink retransmission scheduling interval, used to indicate a smallest quantity of downlink subframes after which next downlink (downlink, DL) HARQ retransmission occurs. This timer is started in three cases: case a. when initial transmission of downlink data occurs; case b. when retransmission of downlink data occurs; and case c. when a preconfigured downlink assignment is performed. This timer is also referred to as a downlink HARQ round trip time (round trip time, RTT) timer.
(5) DRX downlink retransmission timer (drx-RetransmissionTimerDL): time for waiting to receive downlink retransmission scheduling, indicating maximum time during which the terminal device waits for downlink data retransmission. This timer is started when the drx-HARQ-RTT-TimerDL expires and corresponding downlink data is not correctly demodulated.
(6) drx-HARQ-RTT-TimerUL: a minimum uplink retransmission scheduling interval, used to indicate a smallest quantity of uplink subframes after which next uplink (uplink, UL) HARQ retransmission occurs. This timer is started when uplink transmission information is received. This timer is also referred to as an uplink HARQ RTT timer.
(7) DRX uplink retransmission timer (drx-RetransmissionTimerUL): time for waiting to receive uplink retransmission scheduling, indicating maximum time during which the terminal device waits for an uplink retransmission grant. This timer is started when the drx-HARQ-RTT-TimerUL expires and a corresponding uplink grant is not correctly demodulated.
(8) Short DRX cycle timer (drx-ShortCycleTimer): a life cycle of a short cycle. After this timer expires, a long cycle needs to be used. In a case of a short DRX cycle configuration, this timer is started or restarted in the following two cases: case a. the DRX inactivity timer (drx-InactivityTimer) expires; and case b. the terminal device receives a DRX Command MAC CE.
(9) DRX Command MAC CE: MAC signaling that enables the terminal device to immediately enter an opportunity for DRX. After receiving the command, the terminal device immediately stops the DRX on-duration timer (drx-OnDurationTimer) and the DRX inactivity timer (drx-InactivityTimer).

A DRX-related protocol further specifies that C-DRX is in active time in the following cases.

Case 1: The drx-onDurationTimer, the drx-InactivityTimer, the drx-RetransmissionTimerUL, the drx-RetransmissionTimerDL, or a MAC contention resolution timer (mac-ContentionResolutionTimer) is running.

Case 2: There is a pending scheduling request (scheduling request, SR) sent on a PUCCH, that is, an SR is sent, and the SR is in a pending (pending) state. Correspondingly, an sr-ProhibitTimer (SR prohibit timer) may be started. The sr-ProhibitTimer is configured specific to an SP (that is, configured per SR). When this timer is started, the terminal device cannot send a new SR.

Case 3: An uplink HARQ retransmission grant may arrive, and there is data in a corresponding HARQ buffer.

Case 4: In a case of random access in non-contention mode, after successfully receiving a message 2, the terminal device has not yet received a PDCCH that is identified by a C-RNTI and that indicates new data transmission.

Case 5: Time during which the terminal device is required to monitor a PDCCH as specified in other parts of the protocol, for example, semi-persistent scheduling (including uplink and/or downlink) time, a window period for a random access message 2, and system information reception.

In a carrier aggregation scenario, cells in different frequency band ranges may all be configured for a terminal device, for example, some cells in an FR1 (the FR1 represents a low-frequency band) and some cells in an FR2 (the FR2 represents a high-frequency millimeter wave band) are configured. Shorter active time may be configured in a DRX cycle for the cells in the FR2 as compared with the cells in the FR1, to further save energy. Because there is a low probability that a case such as retransmission occurs, the cells in the FR1 and the cells in the FR2 may share a set of rules to reduce complexity. Based on this, the protocol allows two C-DRX groups (C-DRX group) to be configured for the terminal device. For example, all cells may be divided into two groups (for example, one group of cells in the FR1 and one group of cells in the FR2), and each group of cells has a C-DRX configuration. Timers independently configured for each C-DRX group include the drx-onDurationTimer and the drx-InactivityTimer, and timers jointly configured for the two C-DRX groups include the drx-RetransmissionTimerDL, the drx-RetransmissionTimerUL, the drx-ShortCycleTimer, the drx-HARQ-RTT-TimerDL, and the drx-HARQ-RTT-TimerUL.

### (3) Cell discontinuous transmission/discontinuous reception (cell DTX/DRX)

To save energy, a possible manner is to configure a cycle, including active time (active time) and inactive time (inactive time), for a cell of a terminal device, to save energy. Within the inactive time in the cycle, the terminal device does not receive/does not send some signals. Within the active time in the cycle, the terminal device may receive/send the foregoing signals. In this application, the foregoing energy saving technology is referred to as cell DTX/DRX. Optionally, cell DTX/DRX takes effect for all terminal devices in a first cell, or a network device indicates cell DTX/DRX to all users in a first cell by using first indication information, or all users in a first cell have a same cell DTX/DRX configuration.

Cell DTX/DRX may be configured at a granularity of a cell (cell). The network device may send a plurality of cell DTX/DRX configurations to a terminal device by using RRC signaling, and enable (or referred to as activate) one of the plurality of cell DTX/DRX configurations for a cell by using downlink control information (downlink control information, DCI) or a MAC control element (control element, CE).

It should be noted that, in this application, cell DTX/DRX is a short name of the foregoing energy saving technology. For example, the foregoing energy saving technology may also be referred to as an energy saving mode 1 or an energy saving configuration 1. A name of the energy saving technology is not limited in this application.

A cell DTX/DRX configuration may include one or more of the following information: a cycle length, a start time point, an end time point, on-duration, off-duration, or the like. The start time point is a start moment of active time in a cell DTX/DRX cycle, the end time point is a start moment of inactive time in the cell DTX/DRX cycle, the on-duration is duration of the active time, and the off-duration is duration of the inactive time.

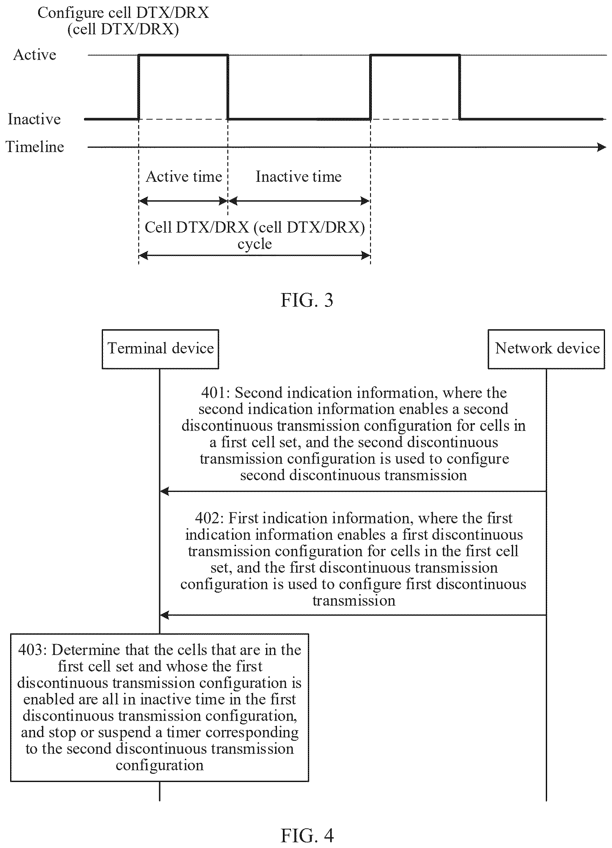

For example, FIG. 3 shows active time and inactive time in a cell DTX/DRX cycle. The signals/channels are not sent/are not received within the inactive time, so that power consumption can be reduced for a terminal device. As shown in FIG. 3, the cell DTX/DRX cycle includes the active time (also referred to as an active period) and the inactive time (also referred to as an inactive period) in a time sequence.

A channel/signal transmitted within the active time in the cell DTX/DRX cycle may be a downlink channel, or include a downlink channel and an uplink channel.

For example, the uplink channel may include at least one of the following channels: a configured grant physical uplink shared channel (configured grant PUSCH, CG PUSCH, where PUSCH is an English abbreviation for physical uplink shared channel), a hybrid automatic repeat request - acknowledge (hybrid automatic repeat request - acknowledge, HARQ-ACK) for a semi-persistent scheduled physical downlink shared channel (semi-persistent scheduled physical downlink shared channel, SPS PDSCH), a scheduling request (scheduling request, SR), a physical random access channel (physical random access channel, PRACH), a random access message A, or a random access message 3.

For example, the downlink channel may include at least one of the following channels:
a PDCCH scrambled with a modulation and coding scheme cell radio network temporary identifier (modulation and coding scheme cell RNTI, MCS-C-RNTI), a PDCCH scrambled with a power saving radio network temporary identifier (power saving RNTI, PS-RNTI), a PDCCH scrambled with a system information radio network temporary identifier (system information RNTI, SI-RNTI), a PDCCH scrambled with a random access radio network temporary identifier (random access RNTI, RA-RNTI), a PDCCH scrambled with a temporary cell radio network temporary identifier (temporary cell RNTI, TC-RNTI), a PDCCH scrambled with a paging radio network temporary identifier (paging RNTI, P-RNTI), a PDCCH scrambled with a paging early indication radio network temporary identifier (paging early indication RNTI, PEI-RNTI), an SSB, system information, a paging message, a random access message 2, a random access message 4, a random access message B, beam failure recovery (BFR), or a semi-persistent scheduled physical downlink shared channel (SPS PDSCH).

In this application, cell DTX/DRX and C-DRX are two different energy saving modes. According to a possible understanding manner, the terminal device does not send or does not receive a first channel within the cell DTX/DRX inactive time, and the terminal device does not send or does not receive a second channel within the C-DRX inactive time, where the first channel and the second channel are not exactly the same. According to another possible understanding manner, cell DTX/DRX is an enhancement or a supplement to C-DRX in a current communication protocol.

If both C-DRX and cell DTX/DRX are configured for a cell, a C-DRX configuration and a cell DTX/DRX configuration may be different (for example, cycle lengths are different, and start time points are different); and an active time period may occur outside configured active time in a C-DRX cycle due to running of a C-DRX timer, and this time period may be a cell DTX/DRX inactive time period. Therefore, an understanding of the timer or a processing behavior on the timer by the terminal device and the network device need to be specified, to control sending/receiving by the terminal device.

Therefore, embodiments of this application provide a communication method and apparatus, to control sending/receiving by a terminal device in a scenario in which a first discontinuous transmission configuration (for example, a cell DTX/DRX configuration) and a second discontinuous transmission configuration (for example, a C-DRX configuration) are configured for a cell.

To make the objectives, the technical solutions, and the advantages of this application clearer, the following further describes this application in detail with reference to the accompanying drawings. The specific operation method in the method embodiment may also be applied to the apparatus embodiment or the system embodiment.

Based on the network system architecture shown in FIG. 1 and the foregoing content of related technology descriptions, FIG. 4 shows an example of a possible schematic flowchart of a communication method according to an embodiment of this application. A solution in FIG. 4 is described by using an example in which a network apparatus interacts with a terminal apparatus. Specifically, a procedure is described by using an example in which the network apparatus is a network device and the terminal apparatus is a terminal. For related descriptions of the network apparatus and the terminal apparatus, refer to the foregoing content. Details are not described again.

As shown in FIG. 4, the method includes the following steps.

Step 401: A network device sends second indication information to a terminal device, where the second indication information enables a second discontinuous transmission configuration for cells in a first cell set, and the second discontinuous transmission configuration is used to configure second discontinuous transmission.

In a possible implementation, the second discontinuous transmission configuration is a C-DRX configuration. Correspondingly, a C-DRX configuration is used to configure C-DRX. Optionally, the C-DRX configuration may include a cycle, active time (and/or inactive time) in the cycle, a start offset, and a channel that is not transmitted within the inactive time in the cycle (or a channel that is transmitted within the active time in the cycle). For clarity, the channel that is transmitted within the active time in the C-DRX cycle (or the channel that is not transmitted within the inactive time in the C-DRX cycle) is referred to as a second channel in this embodiment of this application. For a type of the second channel, refer to the foregoing descriptions. Details are not described herein again.

It can be understood that the second indication information enables the second discontinuous transmission configuration for the cells in the first cell set, that is, the second indication information indicates the C-DRX configuration to take effect for the cells in the first cell set, or activates the C-DRX configuration for the cells, so that the second channel may be transmitted in the cells within the C-DRX active time, and the second channel is not transmitted in the cells within the C-DRX inactive time.

The first cell set may include only one DRX group. The second indication information may indicate to enable the C-DRX configuration for the cells in the DRX group. All the cells in the DRX group have the same C-DRX configuration.

The first cell set may alternatively include a first DRX group and a second DRX group. The second indication information may separately indicate to enable a C-DRX configuration for cells in the first DRX group and enable a C-DRX configuration for cells in the second DRX group. All cells in a same DRX group have a same C-DRX configuration; and cells in different DRX groups may have different C-DRX configurations, for example, different cycle lengths and/or different start offsets.

Step 402: The network device sends first indication information to the terminal device, where the first indication information enables a first discontinuous transmission configuration for cells in the first cell set, and the first discontinuous transmission configuration is used to configure first discontinuous transmission.

The first discontinuous transmission configuration may be a cell DTX/DRX configuration. Optionally, the cell DTX/DRX configuration may include a cycle, active time (and/or inactive time) in the cycle, a start offset, and a channel that is not transmitted within the inactive time in the cycle (or a channel that is transmitted within the active time in the cycle). For clarity, the channel that is transmitted within the active time in the cell DTX/DRX cycle (or the channel that is not transmitted within the inactive time in the cell DTX/DRX cycle) is referred to as a first channel in this embodiment of this application. For a type of the first channel, refer to the foregoing descriptions. Details are not described herein again.

It can be understood that the first indication information enables the discontinuous transmission configuration for the cells in the first cell set, that is, the first indication information indicates a cell DTX/DRX configuration to take effect for N cells in the first cell set, or activates a cell DTX/DRX configuration for each of N cells, so that the first channel may be transmitted in the cells within the active time in the cell DTX/DRX configuration, and the first channel is not transmitted in the cells within the inactive time in the cell DTX/DRX configuration. In this embodiment of this application, the active time in the cell DTX/DRX configuration may be referred to as cell DTX/DRX active time, and the inactive time in the cell DTX/DRX configuration may be referred to as cell DTX/DRX inactive time.

A cell DTX/DRX configuration may enable cell DTX/DRX (or start a cell DTX/DRX mode), or may not enable cell DTX/DRX. For example, the first cell set includes the N cells, and the first indication information may indicate a cell DTX/DRX configuration to take effect for the N cells, so that a cell DTX/DRX configuration is enabled for a part of the N cells, and a cell DTX/DRX configuration is not enabled (that is, the cell DTX/DRX mode is not activated) for another part of the N cells.

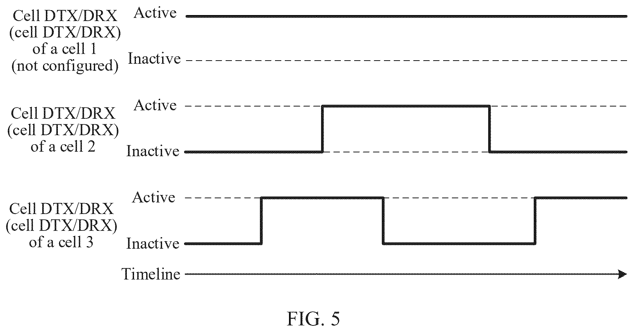

In a possible implementation, the network device may enable a cell DTX/DRX configuration for each of a plurality of cells by using first indication information. The first indication information may enable a cell DTX/DRX configuration for each cell. Cell DTX/DRX configurations enabled for different cells may be the same or may be different (for example, cycle lengths are different, and start time points are different). FIG. 5 shows an example of a diagram of enabling different cell DTX/DRX configurations for different cells by using first indication information. As shown in the figure, with the first indication information, a cell DTX/DRX configuration may not be enabled for a cell 1, a cell DTX/DRX configuration 2 is enabled for a cell 2, and a cell DTX/DRX configuration 3 is enabled for a cell 3. The cell DTX/DRX configuration 2 and the cell DTX/DRX configuration 3 have different cycle lengths and different start time points. Transmitted bits and signaling overheads can be reduced by enabling the cell DTX/DRX configurations for the plurality of cells by using the first indication information, as compared with enabling a cell DTX/DRX configuration for each cell by using indication information.

Optionally, for a cell, if a cell DTX/DRX configuration is enabled for the cell by using first indication information, and if a cell DTX/DRX configuration has previously been enabled for the cell, the previously activated cell DTX/DRX configuration may be deactivated based on the first indication information.

Optionally, the first indication information enables the cell DTX/DRX configuration for the N cells. In the N cells, channels that are not transmitted in different cells may not be exactly the same, or channels that are not transmitted in different cells may be the same.

In a possible implementation, the first indication information may be unicast, multicast, or broadcast RRC signaling. Optionally, the RRC signaling may indicate at least one of a first cycle, a first start time point, a first end time point, on-duration, or off-duration for each of the N cells. The first start time point is a start moment of the active time in the cycle in the first discontinuous transmission (for example, cell DTX/DRX) configuration, the first end time point is a start moment of the inactive time in the cycle, the on-duration is duration of the active time, and the off-duration is duration of the inactive time. Cell DTX/DRX is used as an example. In this implementation, the cell DTX/DRX configuration may be configured and enabled based on the RRC signaling. The implementation is direct and simple.

In another possible implementation, the first indication information may be a unicast, multicast, or broadcast MAC CE, or may be unicast, multicast, or broadcast DCI. Optionally, the MAC CE or the DCI indicates the active time and the inactive time in the cycle in the first discontinuous transmission (for example, cell DTX/DRX) configuration to take effect for each of the N cells. Optionally, before sending the first indication information to the terminal device, the network device further sends first configuration information to the terminal device. The first configuration information indicates a plurality of first discontinuous transmission configurations. In other words, the network device may first configure a plurality of cell DTX/DRX configurations for each of the N cells by using the first configuration information, and then enable (or activate) one of the plurality of cell DTX/DRX configurations for each of the N cells by using the MAC CE or the DCI. In a case of different loads, the network device may activate or deactivate, for a first cell by using the MAC CE or the DCI, a cell DTX/DRX configuration that adapts to a current load, so that communication efficiency can be improved.

Optionally, when the first indication information is the DCI, the DCI may be scrambled with a first RNTI. The first RNTI is a new RNTI type defined in this embodiment of this application. A PDCCH scrambled with the first RNTI is not of a type of the channel on which cell DTX/DRX functions and/or a type of the channel on which C-DRX functions. For example, the network device sends the first indication information by using the PDCCH scrambled with the first RNTI, and the PDCCH scrambled with the first RNTI is not of a type of the first channel or the second channel, so that the network device may notify the terminal device at any moment to activate or deactivate a cell DTX/DRX configuration for the first cell. Optionally, the first RNTI may be terminal device-specific (UE-specific), or terminal device group-specific (UE-group), or cell-specific (common cell-specific).

When the first indication information is the DCI, and the DCI is carried on the PDCCH scrambled with the first RNTI, the first indication information is associated with a first search space set in a possible implementation. The first search space set is one or more of the following search space sets: a Type0-PDCCH CSS set, a Type0A-PDCCH CSS set, a Type0B-PDCCH CSS set, a Type1-PDCCH CSS set, a Type1A-PDCCH CSS set, a Type2-PDCCH CSS set, a Type2A-PDCCH CSS set, a Type3-PDCCH CSS set, or a USS set. In this implementation, an existing search space set in an existing protocol may be used for the first indication information, and a new search space set does not need to be additionally defined for the first indication information, reducing complexity of PDCCH blind detection by the terminal device.

Optionally, when the first indication information is the DCI, the DCI may be scrambled with a second RNTI. The second RNTI is an existing RNTI, for example, a PDCCH scrambled with one of a C-RNTI, a CS-RNTI, an MCS-C-RNTI, an SP-CSI-RNTI, a PS-RNTI, a P-RNTI, or a PEI-RNTI. The first indication information includes a first indicator field, and the first indicator field is an identifier of the first indication information. For example, the network device sends the first indication information by using an existing DCI format, and sets an existing indicator field in the first indication information to all 0s or all 1s, to distinguish between an original indication function of the indicator field and a new function in this embodiment of this application. For example, the first indicator field is set to all 0s, to indicate to activate a cell DTX/DRX configuration. The first indication information is sent by using the existing DCI format, so that check complexity of cyclic redundancy check (cyclic redundancy check, CRC) can be reduced.

Optionally, when the first indication information is the DCI, the DCI may be DCI formed by adding one or more fields to the existing DCI format. The added one or more fields are used to activate or deactivate the first discontinuous transmission configuration (that is, the cell DTX/DRX configuration), that is, indicate not to transmit the first channel in the cells within the active time period. Therefore, when the cell DTX/DRX configuration is configured, an additional quantity of blind detections may not be increased, and an original function of the existing DCI format is not affected.

It can be understood that a sequence of step 401 and step 402 is merely an example. This is not limited in this embodiment of this application. For example, the network device may alternatively first send the first indication information, and then send the second indication information.

It can be understood that the foregoing method for enabling the first discontinuous transmission configuration and the second discontinuous transmission configuration by performing step 401 and step 402 is merely an example. This is not limited in this embodiment of this application.

Step 403: The terminal device determines that the cells that are in the first cell set and whose first discontinuous transmission configuration is enabled are all in the inactive time in the first discontinuous transmission configuration, and stops or suspends a timer corresponding to the second discontinuous transmission configuration.

The first cell set may include only the one DRX group, or may include the two DRX groups (the first DRX group and the second DRX group). In different cases, the terminal device has different processing manners. The following separately describes the processing methods of the terminal device in different cases.

In the following embodiment, an example in which the first discontinuous transmission configuration is the cell DTX/DRX configuration and the second discontinuous transmission configuration is the C-DRX configuration is used. Certainly, the first discontinuous transmission configuration and the second discontinuous transmission configuration may alternatively be replaced by other types of discontinuous transmission configuration. This is not limited in this embodiment of this application.
(I) The first cell set includes only the one DRX group. For ease of description, the DRX group included in the first cell set is referred to as a first DRX group.

In this case, the first indication information may enable the cell DTX/DRX configuration for the N cells in the first DRX group, where N is a positive integer. The N cells may be all the cells in the first DRX group, or may be some cells in the first DRX group. When the N cells are all in the cell DTX/DRX inactive time, the terminal device may stop or suspend the timer corresponding to C-DRX. It can be understood that stopping the timer means stopping running of the timer and resetting the timer to zero, and suspending the timer means suspending running of the timer and retaining a suspended state of the timer. After the timer is suspended, the timer may be resumed subsequently, that is, the timer continues to run from the suspended state of the timer.

When the N cells whose cell DTX/DRX configuration is enabled are all in the cell DTX/DRX inactive time, the first channel is not transmitted in the N cells. The timer corresponding to C-DRX is stopped or suspended, so that running of the timer can be reduced, and a sending or receiving behavior of the terminal device can be controlled.

Optionally, the timer includes one or more of the following: a DRX inactivity timer (drx-InactivityTimer), an SR prohibit timer (sr-ProhibitTimer), a MAC contention resolution timer (mac-ContentionResolutionTimer), a short DRX cycle timer (drx-ShortCycleTimer), a HARQ round trip time timer (drx-HARQ-RTT-TimerDL), an uplink HARQ round trip time timer (drx-HARQ-RTT-TimerUL), a DRX uplink retransmission timer (drx-RetransmissionTimerUL), or a DRX downlink retransmission timer (drx-RetransmissionTimerDL).

After suspending the timer, the terminal device may further resume the suspended timer when a specific condition is met. In a possible implementation, when the N cells that are in the first DRX group and whose cell DTX/DRX configuration is enabled are all in the cell DTX/DRX active time, the suspended timer is resumed. In another possible implementation, when the first DRX group is in the C-DRX active time, the suspended timer is resumed. That the first DRX group is in the C-DRX active time may be understood as that all the cells in the first DRX group are in the C-DRX active time. In still another possible implementation, when the N cells that are in the first DRX group and whose cell DTX/DRX configuration is enabled are all in the active time in the cell DTX/DRX configuration, and the first DRX group is in the C-DRX active time, the suspended timer is resumed. In the foregoing implementations, after the timer is suspended, the timer may further continue to be enabled on a subsequent enabling occasion, so that transmission occasions can be increased for the channel on which cell DTX/DRX functions and/or the channel on which C-DRX functions.

(II) The first cell set includes the two DRX groups: the first DRX group and the second DRX group.

(1) In a first case, the first indication information enables the cell DTX/DRX configuration for N1 cells in the first DRX group, where the N1 cells are all or some cells in the first DRX group, and N1 is a positive integer. The second indication information enables the C-DRX configuration for the first DRX group and the second DRX group. It can be understood that enabling the C-DRX configuration for the first DRX group means enabling the C-DRX configuration for all the cells in the first DRX group.

When the N1 cells that are in the first DRX group and whose cell DTX/DRX configuration is enabled are all in the cell DTX/DRX inactive time, the terminal device may stop or suspend a first timer of the first DRX group. The first timer is the timer corresponding to C-DRX. When the N1 cells that are in the first DRX group and whose cell DTX/DRX configuration is enabled are all in the cell DTX/DRX inactive time, the first channel is not transmitted in the N1 cells. The timer corresponding to C-DRX of the first DRX group is stopped or suspended, so that running of the timer can be reduced, and a sending or receiving behavior of the terminal device can be controlled.

Optionally, the first timer is a timer that runs independently for the first DRX group, and specifically includes one or more of the following: a drx-InactivityTimer, an sr-ProhibitTimer, or a mac-ContentionResolutionTimer.

After suspending the timer, the terminal device may further resume the suspended timer when a specific condition is met. In a possible implementation, when the N1 cells that are in the first DRX group and whose cell DTX/DRX configuration is enabled are in the cell DTX/DRX active time, the suspended first timer of the first DRX group is resumed. In another possible implementation, when the first DRX group is in the C-DRX active time, the suspended first timer of first DRX is resumed. In still another possible implementation, when the N1 cells that are in the first DRX group and whose cell DTX/DRX configuration is enabled are all in the cell DTX/DRX active time, and the first DRX group is in the C-DRX active time, the suspended first timer of the first DRX group is resumed. In the foregoing implementations, after the timer is suspended, the timer may further continue to be enabled on a subsequent enabling occasion, so that transmission occasions can be increased for the channel on which cell DTX/DRX functions and/or the channel on which C-DRX functions.

(2) The first indication information enables the cell DTX/DRX configuration for N1 cells in the first DRX group, and enables the cell DTX/DRX configuration for N2 cells in the second DRX group, where N1 and N2 are both positive integers. The N1 cells are all or some cells in the first DRX group, and the N2 cells are all or some cells in the second DRX group. The second indication information enables the C-DRX configuration for the first DRX group and the second DRX group.

Optionally, when the N1 cells that are in the first DRX group and whose cell DTX/DRX configuration is enabled are all in the cell DTX/DRX inactive time, the terminal device may stop or suspend a first timer of the first DRX group. The first timer is a timer that runs independently for the first DRX group, and may be, for example, one or more of the following: a drx-InactivityTimer, an sr-ProhibitTimer, or a mac-ContentionResolutionTimer.

Optionally, when the N2 cells that are in the second DRX group and whose cell DTX/DRX configuration is enabled are all in the cell DTX/DRX inactive time, the terminal device may stop or suspend a first timer of second DRX. The first timer is a timer that runs independently for the second DRX group, and may be, for example, one or more of the following: a drx-InactivityTimer, an sr-ProhibitTimer, or a mac-ContentionResolutionTimer.

Optionally, when the N1 cells that are in the first DRX group and whose cell DTX/DRX configuration is enabled are all in the cell DTX/DRX inactive time, and the N2 cells that are in the second DRX group and whose cell DTX/DRX configuration is enabled are all in the cell DTX/DRX inactive time, the terminal device may stop or suspend a second timer corresponding to C-DRX. The second timer is a timer shared by the first DRX group and the second DRX group. Optionally, the second timer includes one or more of the following: a drx-RetransmissionTimerUL, a drx-RetransmissionTimerDL, a drx-HARQ-RTT-TimerDL, a drx-HARQ-RTT-TimerUL, or a drx-ShortCycleTimer.

Optionally, after the timer shared by the first DRX group and the second DRX group is suspended, the suspended timer may further be resumed when a specific condition is met. In a possible implementation, when the N1 cells that are in the first DRX group and whose cell DTX/DRX configuration is enabled and the N2 cells that are in the second DRX group and whose cell DTX/DRX configuration is enabled are all in the cell DTX/DRX active time, the terminal device may resume the suspended second timer (that is, the timer shared by the first DRX group and the second DRX group). In another possible implementation, when the first DRX group and the second DRX group are in the C-DRX active time, the terminal device may resume the suspended second timer (that is, the timer shared by the first DRX group and the second DRX group). In still another possible implementation, when the N1 cells that are in the first DRX group and whose cell DTX/DRX configuration is enabled and the N2 cells that are in the second DRX group and whose cell DTX/DRX configuration is enabled are all in the cell DTX/DRX active time, and the first DRX group and the second DRX group are in the C-DRX active time, the terminal device may resume the suspended second timer. In the foregoing implementations, after the timer is suspended, the timer may further continue to be enabled on a subsequent enabling occasion, so that transmission occasions can be increased for the channel on which cell DTX/DRX functions and/or the channel on which C-DRX functions.

Optionally, when the N1 cells that are in the first DRX group and whose cell DTX/DRX configuration is enabled are all in the cell DTX/DRX active time, and/or when the first DRX group is in the C-DRX active time, the terminal device may resume the suspended first timer of the first DRX group.

Optionally, when the N2 cells that are in the second DRX group and whose cell DTX/DRX configuration is enabled are all in the cell DTX/DRX active time, and/or when the second DRX group is in the C-DRX active time, the terminal device may resume the suspended first timer of the second DRX group.

For a cell that is in cell DTX/DRX inactive time (earlier), the inactive time of the cell may overlap with C-DRX active time. In other words, the cell is in the cell DTX/DRX inactive time in this period of time, and due to running of a timer corresponding to C-DRX, this period of time may be the C-DRX active time. For this overlapping period of time, this embodiment of this application specifies how to determine an active status of the cell in this overlapping period of time, to ensure consistency of determining for this overlapping period of time by the terminal device and the network device.

The first cell is used as an example. In a possible implementation, in a time period, if the first cell is in cell DTX/DRX inactive time and the first cell is in C-DRX active time, this time period may be referred to as an overlapping time period. The terminal device and/or the network device may consider that the cell is in an inactive state in this overlapping time period. It can be understood that the first cell being in the inactive state in this overlapping time period means that the terminal device and/or the network device do/does not transmit, in the first cell in this overlapping time period, a channel on which cell DTX/DRX functions (for example, the first channel) and/or a channel on which C-DRX functions (for example, the second channel). In this way, power consumption can be further reduced.

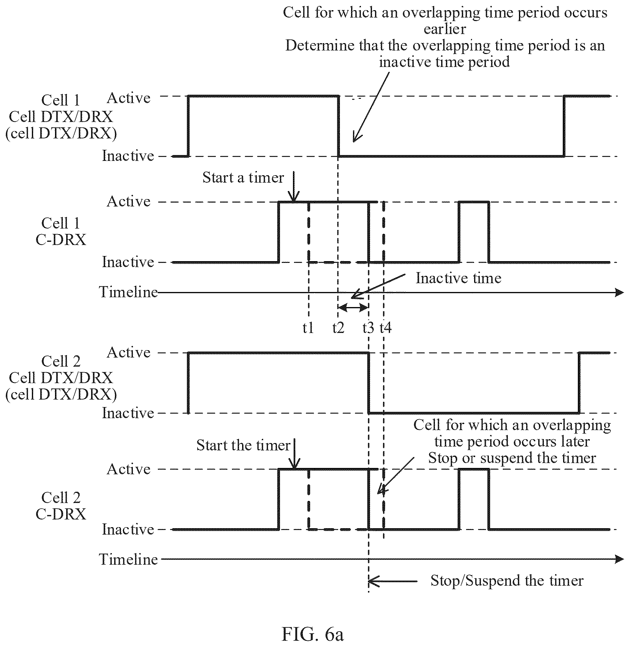

For example, FIG. 6a is a diagram in which, when a first cell set includes only one DRX group, a terminal device determines that cells in the DRX group are in an inactive state in an overlapping time period, and stops or suspends a C-DRX timer based on this. As shown in FIG. 6a, the DRX group includes a cell 1 and a cell 2, cell DTX/DRX configurations and a C-DRX configuration are enabled for both the cell 1 and the cell 2, and the cell DTX/DRX configuration of the cell 1 is different from the cell DTX/DRX configuration of the cell 2 (in this example, cell DTX/DRX cycle lengths are different). The timer is started in a C-DRX active time period, so that the cell 1 and the cell 2 do not enter a C-DRX inactive state at a moment t1, but enter the C-DRX inactive state at a moment t3. In a time period between a moment t2 and the moment t3, the cell 1 is in a cell DTX/DRX inactive state and in a C-DRX active state, that is, the time period is an overlapping time period. The terminal device determines that the cell 1 is in the inactive state in the overlapping time period. Therefore, it may be considered that the cell 1 enters the cell DTX/DRX inactive state at the moment t2. The cell 2 enters both the cell DTX/DRX and C-DRX inactive states at the moment t3. In other words, both the cell 1 and the cell 2 are in the cell DTX/DRX inactive state from the moment t3. Therefore, the C-DRX timer is stopped or suspended at the moment t3. A moment t4 in the figure indicates that, if the operation of stopping or suspending the timer is not performed, the cell 1 and the cell 2 enter the C-DRX inactive state at the moment t4. In other words, the moment t4 is a moment when the timer expires or stops running. Because the operation of stopping or suspending the timer is performed, the cell 1 and the cell 2 enter the C-DRX inactive state at the moment t3.

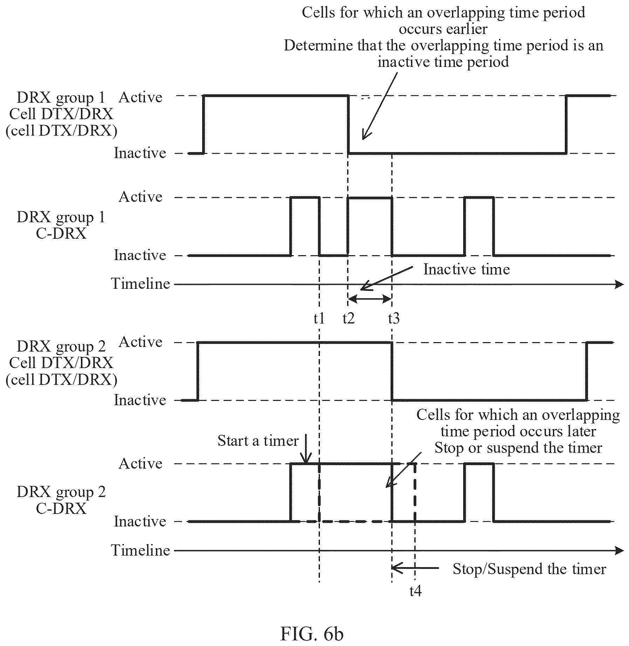

For example, FIG. 6b is a diagram in which, when a first cell set includes two DRX groups (a DRX group 1 and a CRX group 2), a terminal device determines that cells in the DRX groups are in an inactive state in an overlapping time period, and stops or suspends a C-DRX timer based on this. As shown in FIG. 6b, a same cell DTX/DRX configuration is enabled for all cells in the DRX group 1, a same cell DTX/DRX configuration is enabled for all cells in the DRX group 2, and the cell DTX/DRX configurations enabled for the DRX group 1 and the DRX group 2 are different. For the cells in the DRX group 1, the cells enter a C-DRX active state at a moment t2 and enter a C-DRX inactive state at a moment t3, due to running of the C-DRX timer. Thus, in a time period between the moment t2 and the moment t3, the cells are in a cell DTX/DRX inactive state and in the C-DRX active state. In other words, this time period is an overlapping time period. The terminal device determines that the cells in the DRX group 1 are in the inactive state in the overlapping time period. Therefore, it may be considered that the cells in the DRX group 1 enter the cell DTX/DRX inactive state at the moment t2. For the cells in the DRX group 2, the cells are always in the C-DRX active state from a moment t1 to the moment t3 due to running of the C-DRX timer. At the moment t3, the cells in the DRX group 2 enter the cell DTX/DRX inactive state. In other words, the cells in the DRX group 1 and the cells in the DRX group 2 are all in the cell DTX/DRX inactive state from the moment t3. Therefore, the C-DRX timer is stopped or suspended at the moment t3. A moment t4 in the figure indicates that, if the operation of stopping or suspending the timer is not performed, the cells in the DRX group 2 enter the C-DRX inactive state at the moment t4. In other words, the moment t4 is a moment when the timer expires or stops running. Because the operation of stopping or suspending the timer is performed, the cells in the DRX group 2 enter the C-DRX inactive state at the moment t3.

In another possible implementation, the terminal device and/or the network device consider/considers that a cell is in an active state in an overlapping time period. The terminal device and the network device may transmit, in the cell in this time period, a channel on which cell DTX/DRX functions and/or a channel on which C-DRX functions, so that transmission occasions can be increased for these channels.

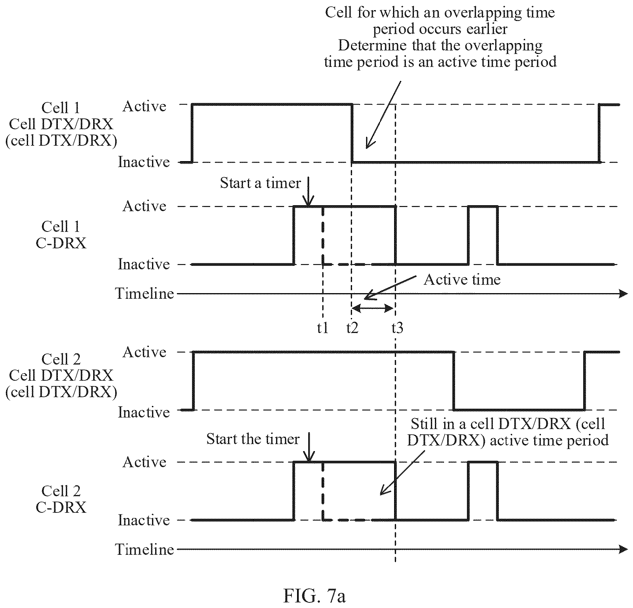

For example, FIG. 7a is a diagram in which, when a first cell set includes only one DRX group, a terminal device determines that cells in the DRX group are in an active state in an overlapping time period. As shown in FIG. 7a, the DRX group includes a cell 1 and a cell 2, cell DTX/DRX configurations and a C-DRX configuration are enabled for both the cell 1 and the cell 2, and the cell DTX/DRX configuration of the cell 1 is different from the cell DTX/DRX configuration of the cell 2. A timer is started in a C-DRX active time period, so that the cell 1 and the cell 2 do not enter a C-DRX inactive state at a moment t1, but enter the C-DRX inactive state at a moment t3. In a time period between a moment t2 and the moment t3, the cell 1 is in a cell DTX/DRX inactive state and in a C-DRX active state, that is, the time period is an overlapping time period. The terminal device determines that the cell 1 is in the active state in the overlapping time period. In the time period from the moment t2 to the moment t3, the cell 2 is in both a cell DTX/DRX active state and the C-DRX active state.

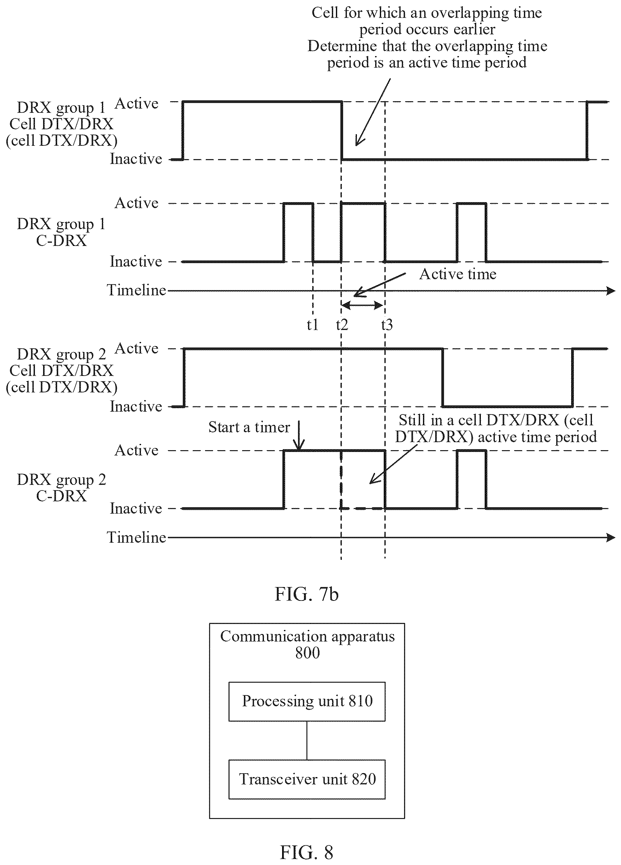

For example, FIG. 7b is a diagram in which, when a first cell set includes two DRX groups (a DRX group 1 and a CRX group 2), a terminal device determines that cells in the DRX groups are in an active state in an overlapping time period. As shown in FIG. 7b, a same cell DTX/DRX configuration is enabled for all cells in the DRX group 1, a same cell DTX/DRX configuration is enabled for all cells in the DRX group 2, and the cell DTX/DRX configurations enabled for the DRX group 1 and the DRX group 2 are different. For the cells in the DRX group 1, the cells enter a C-DRX active state at a moment t2 and enter a C-DRX inactive state at a moment t3, due to running of a C-DRX timer. Thus, in a time period between the moment t2 and the moment t3, the cells are in a cell DTX/DRX inactive state and in the C-DRX active state. In other words, this time period is an overlapping time period. The terminal device determines that the cells in the DRX group 1 are in the active state in the overlapping time period. For the cells in the DRX group 2, the cells are always in the C-DRX active state from a moment t1 to the moment t3 due to running of the C-DRX timer. In this time period, the cells in the DRX group 2 are in a cell DTX/DRX active state.

The foregoing embodiment of this application specifies an understanding of or a behavior on the C-DRX timer of the cells in the same DRX group or different DRX groups when both the cell DTX/DRX configuration and the C-DRX configuration are enabled, so that the terminal device and the network device can correctly understand the cell DTX/DRX configuration and the C-DRX configuration. When all the cells whose cell DTX/DRX configuration is enabled enter the inactive time period, the C-DRX timer is stopped or suspended, so that a corresponding behavior of the C-DRX timer can be clarified, and unnecessary running of the C-DRX timer can be reduced.

It can be understood that, to implement the functions in the foregoing embodiment, the terminal device includes corresponding hardware structures and/or software modules for performing the functions. A person skilled in the art should be easily aware that, in this application, the units and the method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

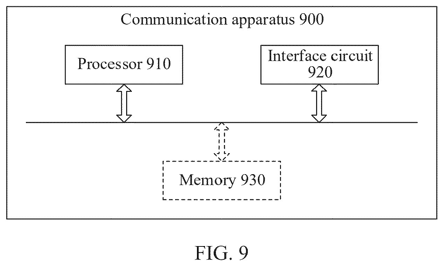

FIG. 8 and FIG. 9 are diagrams of structures of possible communication apparatuses according to embodiments of this application. These communication apparatuses may be configured to implement the functions of the terminal device in the foregoing method embodiment, and therefore can also achieve the beneficial effects of the foregoing method embodiment. In embodiments of this application, the communication apparatus may be one of the terminals 120a to 120j shown in FIG. 1, or may be a module (for example, a chip) used in the terminal.

As shown in FIG. 8, a communication apparatus 800 includes a processing unit 810 and a transceiver unit 820. The communication apparatus 800 is configured to implement the functions of the terminal device in the method embodiment shown in FIG. 4.

When the communication apparatus 800 is configured to implement the functions of the terminal device in the method embodiment shown in FIG. 4, the transceiver unit 820 is configured to receive first indication information and second indication information that are sent by a network device, where the first indication information enables a first discontinuous transmission configuration for cells in a first cell set, and the second indication information enables a second discontinuous transmission configuration for cells in the first cell set; and the processing unit 810 is configured to: determine that the cells that are in the first cell set and whose first discontinuous transmission configuration is enabled are all in inactive time in the first discontinuous transmission configuration, and stop or suspend a timer corresponding to the second discontinuous transmission configuration.

For more detailed descriptions of the processing unit 810 and the transceiver unit 820, directly refer to the related descriptions in the method embodiment shown in FIG. 4. Details are not described herein again.

As shown in FIG. 9, a communication apparatus 900 includes a processor 910 and an interface circuit 920. The processor 910 and the interface circuit 920 are coupled to each other. It can be understood that the interface circuit 920 may be a transceiver or an input/output interface. Optionally, the communication apparatus 900 may further include a memory 930, configured to: store instructions to be executed by the processor 910, store input data required by the processor 910 to run instructions, or store data generated after the processor 910 runs instructions.

When the communication apparatus 900 is configured to implement the method shown in FIG. 4, the processor 910 is configured to implement the function of the processing unit 810, and the interface circuit 920 is configured to implement the function of the transceiver unit 820.

When the communication apparatus is a chip used in the terminal device, the terminal chip implements the functions of the terminal device in the foregoing method embodiment. The terminal chip receives information from another module (for example, a radio frequency module or an antenna) in the terminal device, where the information is sent by the network device to the terminal; or the terminal chip sends information to another module (for example, a radio frequency module or an antenna) in the terminal device, where the information is sent by the terminal device to the network device.

It can be understood that the processor in this embodiment of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor.

Another example of the apparatus is provided in this application. The notification apparatus includes at least one processor and at least one memory. The at least one processor is coupled to the at least one memory. The at least one memory is configured to store instructions. When the instructions are executed by the at least one processor, the communication apparatus is enabled to perform the method in the foregoing embodiment. An example in which the communication apparatus includes one processor and one memory is used. As shown in FIG. 9, the communication apparatus 900 includes one processor 910 and one memory 930. The processor 910 is coupled to the memory 930. The memory 930 stores instructions. When the instructions stored in the memory 930 are executed by the processor 910, the communication apparatus 900 performs the method performed by the terminal device in the foregoing embodiment.

The method steps in embodiments of this application may be implemented by using hardware, or may be implemented by using the software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well known in the art. For example, a storage medium is coupled to the processor, so that the processor can read information from the storage medium and write information into the storage medium. The storage medium may alternatively be a component of the processor. The processor and the storage medium may be located in an ASIC. In addition, the ASIC may be located in the network device or the terminal. The processor and the storage medium may alternatively exist in the network device or the terminal as discrete components.

All or some of the foregoing embodiments may be implemented by using software, hardware, firmware, or any combination thereof. When software is used for implementation, all or some of the embodiments may be implemented in a form of a computer program product. The computer program product includes one or more computer programs or instructions. When the computer programs or the instructions are loaded and executed on a computer, all or some of the procedures or the functions described in embodiments of this application are performed. The computer may be a general-purpose computer, a dedicated computer, a computer network, a network device, user equipment, or another programmable apparatus. The computer programs or the instructions may be stored in a computer-readable storage medium, or be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium that can be accessed by the computer, or a data storage device, such as a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated and unless there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/Or" describes an association relationship between associated objects, and indicates that three relationships may exist. For example, A and/or B may indicate the following cases: Only A exists, both A and B exist, and only B exists, where A and B may be singular or plural. In the text descriptions of this application, the character "/" usually indicates an "or" relationship between associated objects; and in the formulas in this application, the character "/" indicates a "division" relationship between associated objects. "Including at least one of A, B, and C" may indicate the following: including A; including B; including C; including A and B; including A and C; including B and C; and including A, B, and C.

It can be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, applied to a terminal device, wherein the method comprises:
receiving first indication information and second indication information that are sent by a network device, wherein the first indication information enables a first discontinuous transmission configuration for cells in a first cell set, and the second indication information enables a second discontinuous transmission configuration for cells in the first cell set; and
determining that the cells that are in the first cell set and whose first discontinuous transmission configuration is enabled are all in inactive time in the first discontinuous transmission configuration, and stopping or suspending a timer corresponding to the second discontinuous transmission configuration.

2. The method according to claim 1, wherein the cells in the first cell set belong to a first discontinuous reception DRX group, the first indication information enables the first discontinuous transmission configuration for N cells in the first DRX group, the N cells are all cells or some cells in the first DRX group, the second indication information enables the second discontinuous transmission configuration for the first DRX group, and N is a positive integer; and
determining that the cells that are in the first cell set and whose first discontinuous transmission configuration is enabled are all in the inactive time in the first discontinuous transmission configuration, and stopping or suspending the timer corresponding to the second discontinuous transmission configuration comprises:
determining that the N cells are all in the inactive time in the first discontinuous transmission configuration, and stopping or suspending the timer corresponding to the second discontinuous transmission configuration.

3. The method according to claim 2, further comprising:
when the N cells in the first DRX group are all in active time in the first discontinuous transmission configuration, resuming the suspended timer; and/or
when the first DRX group is in active time in the second discontinuous transmission configuration, resuming the suspended timer.

4. The method according to claim 2 or 3, wherein the timer comprises one or more of the following:
a discontinuous reception DRX inactivity timer drx-InactivityTimer, a scheduling request SR prohibit timer sr-ProhibitTimer, a MAC contention resolution timer mac-ContentionResolutionTimer, a short DRX cycle timer drx-ShortCycleTimer, a downlink automatic repeat request HARQ round trip time timer drx-HARQ-RTT-TimerDL, an uplink HARQ round trip time timer drx-HARQ-RTT-TimerUL, a DRX uplink retransmission timer drx-RetransmissionTimerUL, or a DRX downlink retransmission timer drx-RetransmissionTimerDL.

5. The method according to claim 1, wherein the first cell set comprises a first DRX group and a second DRX group, the first indication information enables the first discontinuous transmission configuration for N1 cells in the first DRX group, the N1 cells are all or some cells in the first DRX group, the second indication information enables the second discontinuous transmission configuration for the first DRX group and the second DRX group, and N1 and N2 are both positive integers; and
determining that the cells that are in the first cell set and whose first discontinuous transmission configuration is enabled are all in the inactive time in the first discontinuous transmission configuration, and stopping or suspending the timer corresponding to the second discontinuous transmission configuration comprises:
determining that the N1 cells in the first DRX group are all in the inactive time in the first discontinuous transmission configuration, and stopping or suspending a first timer of the first DRX group, wherein the first timer is a timer corresponding to the second discontinuous transmission configuration.

6. The method according to claim 5, further comprising:
when the N1 cells in the first DRX group are all in active time in the first discontinuous transmission configuration, resuming the suspended first timer of the first DRX group; and/or
when the first DRX group is in active time in the second discontinuous transmission configuration, resuming the suspended first timer of the first DRX group.

7. The method according to any one of claims 5 and 6, wherein the first indication information further enables the first discontinuous transmission configuration for N2 cells in the second DRX group, the N2 cells are all or some cells in the second DRX group, and N2 is a positive integer; and
the method further comprises:
determining that the N2 cells in the second DRX group are all in the inactive time in the first discontinuous transmission configuration, and stopping or suspending a first timer of the second DRX group, wherein the first timer is a timer corresponding to the second discontinuous transmission configuration.

8. The method according to claim 5, further comprising:
when the N2 cells in the second DRX group are all in active time in the first discontinuous transmission configuration, resuming a suspended first timer of the second DRX group; and/or
when the second DRX group is in active time in the second discontinuous transmission configuration, resuming a suspended first timer of the second DRX group.

9. The method according to any one of claims 5 to 8, wherein the first timer comprises one or more of the following:
a drx-InactivityTimer, an sr-ProhibitTimer, or a mac-ContentionResolutionTimer.

10. The method according to any one of claims 7 to 9, wherein the method further comprises:
when the N1 cells in the first DRX group are all in the active time in the first discontinuous transmission configuration, and the N2 cells in the second DRX group are all in the inactive time in the first discontinuous transmission configuration, stopping or suspending a second timer corresponding to the second discontinuous transmission configuration, wherein the second timer is a timer of the first DRX group and the second DRX group.

11. The method according to claim 10, further comprising:
when the N1 cells in the first DRX group and the N2 cells in the second DRX group are all in the active time in the first discontinuous transmission configuration, resuming the suspended second timer; and/or
when the first DRX group and the second DRX group are in the active time in the second discontinuous transmission configuration, resuming the suspended second timer.

12. The method according to any one of claims 10 and 11, wherein the second timer comprises one or more of the following:
a drx-RetransmissionTimerUL, a drx-RetransmissionTimerDL, a drx-HARQ-RTT-TimerDL, a drx-HARQ-RTT-TimerUL, or a drx-ShortCycleTimer.

13. The method according to any one of claims 1 to 12, wherein the first cell set comprises a first cell; and
the method further comprises:
when the first cell is in the inactive time in the first discontinuous transmission configuration, and the first cell is in the active time in the second discontinuous transmission configuration, determining that the first cell is in an inactive state.

14. The method according to any one of claims 1 to 13, wherein the first discontinuous transmission configuration is a cell discontinuous transmission/discontinuous reception cell DTX/DRX configuration, and the second continuous transmission configuration is a connected-mode discontinuous reception C-DRX configuration.

15. A communication method, comprising:
a network device, configured to send first indication information and second indication information to a terminal device, wherein the first indication information enables a first discontinuous transmission configuration for cells in a first cell set, and the second indication information enables a second discontinuous transmission configuration for cells in the first cell set; and
the terminal device, configured to perform the method according to any one of claims 1 to 14.

16. A communication apparatus, comprising a transceiver unit and a processing unit, wherein
the transceiver unit is configured to receive first indication information and second indication information that are sent by a network device, wherein the first indication information enables a first discontinuous transmission configuration for cells in a first cell set, and the second indication information enables a second discontinuous transmission configuration for cells in the first cell set; and
the processing unit is configured to: determine that the cells that are in the first cell set and whose first discontinuous transmission configuration is enabled are all in inactive time in the first discontinuous transmission configuration, and stop or suspend a timer corresponding to the second discontinuous transmission configuration.

17. A communication apparatus, comprising a unit or a module configured to perform the method according to any one of claims 1 to 14.

18. A communication apparatus, comprising one or more processors and one or more memories, wherein the one or more memories store one or more programs, and when the program is executed by the one or more processors, the apparatus is enabled to perform the method according to any one of claims 1 to 14.

19. A chip system, wherein the chip system comprises at least one chip and a memory, and the at least one chip is configured to read and execute a program stored in the memory, to implement the method according to any one of claims 1 to 14.

20. A readable storage medium, wherein the readable storage medium comprises a program, and when the program is run on an apparatus, the apparatus is enabled to perform the method according to any one of claims 1 to 14.

21. A program product, wherein when the program product is run on an apparatus, the apparatus is enabled to perform the method according to any one of claims 1 to 14.
